(19) Europäisches Patentamt
European Patent Office
Office européen des brevets

(11) **EP 4 783 449 A1**

(12) **EUROPEAN PATENT APPLICATION**

(43) Date of publication:
29.07.2026 Bulletin 2026/31

(21) Application number: 26305058.5

(22) Date of filing: **14.01.2026**

(51) International Patent Classification (IPC):
*H02P 1/04* (2006.01)     *H02P 1/16* (2006.01)
*H02P 6/20* (2016.01)

(52) Cooperative Patent Classification (CPC):
**H02P 1/04; H02P 1/16; H02P 6/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.01.2025 CN 202510124941**

(71) Applicant: **SCHNEIDER ELECTRIC INDUSTRIES
SAS**
**92500 Rueil-Malmaison (FR)**

(72) Inventors:
• HUANG, Jie
**SHANGHAI 201203 (CN)**
• SHI, Ying
**SHANGHAI 201203 (CN)**

(74) Representative: **Plasseraud IP
104 Rue de Richelieu
CS92104
75080 Paris Cedex 02 (FR)**

(54) **METHOD AND APPARATUS FOR CONTROLLING STARTING CURRENT OF MOTOR**

(57) There is provided a method for controlling a starting current of a motor, including: determining a peak short-circuit current calculation coefficient or a power factor of the motor; determining a power factor angle corresponding to the peak short-circuit current calculation coefficient or the power factor; and selecting a closing angle to start the motor based on the determined power factor angle. According to the embodiments of the present invention, a starting current of a motor can be reduced, a magnitude of a current flowing through a SiC MOSFET can be reduced, and the reliability of the SiC MOSFET is greatly improved, thus ensuring the operation safety of a product.

FIG.1

**Description**

TECHNICAL FIELD

The present invention relates to a method and an apparatus for controlling a starting current of a motor.

BACKGROUND

With the development of many emerging industries, performances of a traditional Si power semiconductor device have reached their limits, and it is difficult to meet new application scenarios with high efficiency and high power density. However, a SiC (Silicon Carbide) MOSFET (Metal Oxide Semiconductor Field Effect Transistor) has low switching loss, high switching frequency, high withstand voltage and excellent temperature characteristics, which greatly reduces performance requirements of heat sinks in high-power power electronic applications, and greatly improves a conversion efficiency, a power density and a stability of the whole power electronic apparatus. However, compared with the Si power semiconductor, a short-circuit tolerance of the SiC MOSFET is relatively weak, which brings new challenges to the application of the SiC MOSFET in short-circuit protection scenario (motor protection).

Currently, if no controlling of current is applied to a motor at the moment when it is started, a large inrush current will be generated. For example, the motor with IE4 may generate an inrush current of 25.5 times a rated current, and such a large inrush current may easily damage elements of the motor circuit.

Therefore, a method and an apparatus that can effectively control a starting current of a motor are required.

SUMMARY

According to an aspect of an embodiment of the present invention, there is provided a method for controlling a starting current of a motor, comprising: determining a peak short-circuit current calculation coefficient or a power factor of the motor; determining a power factor angle corresponding to the peak short-circuit current calculation coefficient or the power factor; and selecting a closing angle to start the motor based on the determined power factor angle.

In an example, the determining the peak short-circuit current calculation coefficient or the power factor of the motor comprises determining the peak short-circuit current calculation coefficient, and the determining the power factor angle corresponding to the peak short-circuit current calculation coefficient or the power factor comprises determining the power factor angle corresponding to the peak short-circuit current calculation coefficient.

In an example, the determining the peak short-circuit current calculation coefficient comprises: determining an initial peak short-circuit current calculation coefficient; starting the motor with a power factor angle corresponding to the initial peak short-circuit current calculation coefficient as an initial closing angle, and measuring a starting inrush current; adjusting the peak short-circuit current calculation coefficient based on an error rate between the starting inrush current and a reference current.

In an example, the reference current is one of a locked-rotor amps when the motor is started at the closing angle determined by the current peak short-circuit current calculation coefficient and a locked-rotor amps when the motor is started at a closing angle determined by an optimal peak short-circuit current calculation coefficient of the motor.

In an example, the error rate between the starting inrush current and the reference current comprises an error rate of each of three phases, and the adjusting the peak short-circuit current calculation coefficient based on the error rate between the starting inrush current and the reference current comprises adjusting the peak short-circuit current calculation coefficient based on an expected error rate among the error rates of the three phases.

In an example, the peak short-circuit current calculation coefficient is a fixed value.

In an example, the peak short-circuit current calculation coefficient is based on an equivalent impedance at a short-circuit point in a system.

In an example, the determining the peak short-circuit current calculation coefficient or the power factor of the motor comprises determining the power factor, and the determining the power factor angle corresponding to the peak short-circuit current calculation coefficient or the power factor comprises determining the power factor angle corresponding to the power factor.

In an example, the selecting the closing angle to start the motor based on the determined power factor angle comprises: subtracting a predetermined bias angle from the determined power factor angle to obtain a corrected closing angle.

In an example, the method further comprises: closing two of the three phases at the corrected closing angle; and closing a remaining one of the three phases at the corrected closing angle after a predetermined period of time has elapsed after the two phases are closed.

In an example, the determining the peak short-circuit current calculation coefficient or the power factor of the motor further comprises determining the peak short-circuit current calculation coefficient or the power factor based on an International Efficiency of the motor.

According to another aspect of an embodiment of the present invention, there is provided an apparatus for controlling a starting current of a motor, comprising: a memory; and a processor coupled to the memory and configured to perform any of the aforementioned methods.

Therefore, according to the embodiments of the present invention, the starting current of the motor can be reduced, a magnitude of a current flowing through a SiC MOSFET can be reduced, and a reliability of the SiC MOSFET is greatly improved, thus ensuring the operation safety of a product.

In addition, according to the embodiments of the present invention, extra heat additionally generated in a motor circuit in a starting process is reduced, so that an overall temperature inside a product is reduced, which is beneficial to temperature rise of the product. Nuisance tripping of a system caused by an excessive starting current of the motor can also be avoided. Furthermore, the method for controlling the starting current of the motor according to the embodiments of the present invention is simple to implement and low in cost.

BRIEF DESCRIPTION OF THE DRAWINGS

The present invention will be more easily understood through the following detailed description with the help of the accompanying drawings, in which the same reference numerals designate units of the same structure, and in which:

FIG. 1 is a schematic diagram illustrating a starting inrush current;
FIG. 2 illustrates a schematic flowchart of a method for controlling a starting current of a motor according to an embodiment of the present invention;
FIG. 3 illustrates a schematic diagram of a relationship between a real part R and an imaginary part X of an impedance Z according to an embodiment of the present invention;
FIG. 4 illustrates a schematic flowchart of a more detailed method for controlling a starting current of a motor according to an embodiment of the present invention;
FIG. 5 illustrates a schematic flowchart of a method for adaptively adjusting a peak short-circuit current calculation coefficient k according to an embodiment of the present invention;
FIG. 6 illustrates a schematic diagram of a waveform of a starting current of a motor without controlling a closing angle of the motor; and
FIG. 7 illustrates a schematic diagram of a waveform of a starting current of a motor with controlling a closing angle of the motor according to an embodiment of the present invention.

DETAILED DESCRIPTION

The technical scheme in the embodiments of the present invention will be clearly and completely described below with reference to the drawings in the embodiments of the present invention. Obviously, the described embodiments are a part of the embodiments of the present invention, but not all of the embodiments. Based on the embodiments in the present invention, all other embodiments obtained by a person of ordinary skill in the art without inventive effort belong to the scope of protection of the present invention.

Furthermore, it should be noted that in the specification, A connected to B may mean "A directly connected to B" or "A connected to B via other middleware." A connected between B and C may mean "A directly connected to B and C" or "A connected to B and C via other middleware."

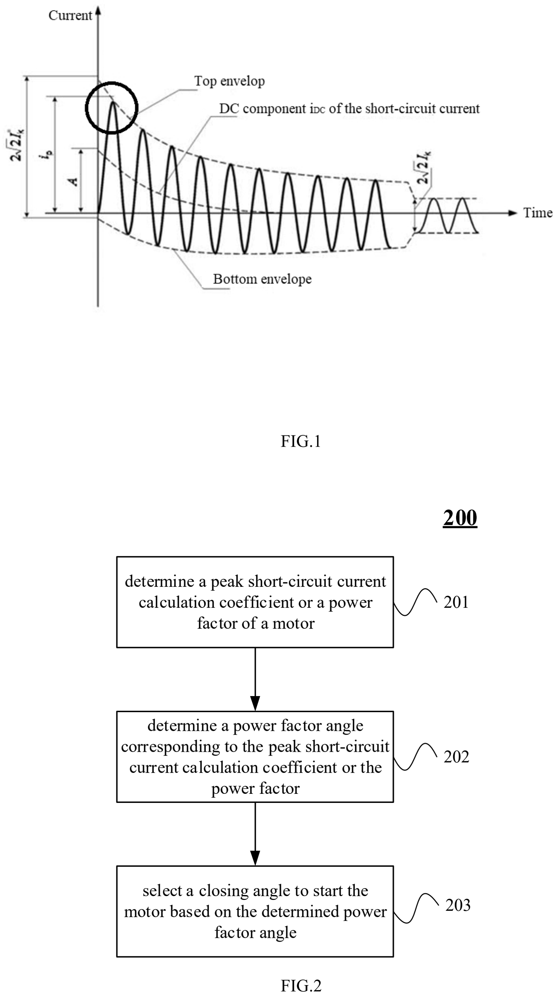

FIG. 1 is a schematic diagram illustrating a starting inrush current.

FIG. 1 illustrates a diagram of an inrush current of a motor with an International Efficiency (IE) 3/IE4 when it is started, in which a peak inrush current is indicated in a circle in FIG. 1.

Due to starting characteristics of the motor, at the moment when it is started, a large inrush current will be generated, which may reach up to 25.5 times a rated current. The inrush current will directly lead to a failure to realize a tripping curve of a product for the motor, resulting in the failure to start the motor (especially under full load). In addition, the inrush current will cause the product to be unable to distinguish a short-circuit current from a starting current of the motor. If the motor is started frequently, the product or the motor may be damaged.

Currently, there are three main methods to limit the starting current of the motor: a soft starter current-limiting starting method, which gradually increases a working voltage of the motor and allows the motor to accelerate slowly through a control signal output by the soft starter when the motor is started, so as to limit the starting current, but this method increases the cost of customers, and not all customers will configure it; a frequency converter current-limiting starting method, which adjusts a voltage, a current and a frequency through a pulse width modulation (PWM) sine wave of a frequency converter, and can control a magnitude of a current when the motor is started to reduce the starting current, but this method requires customers to configure the frequency converter, which increases the cost of customers and limits the application customer base of the product; and a reduced-voltage starting method, which adds certain circuit devices to a voltage of a power supply network or in a starting process when the motor is started to help the motor be started smoothly, but this method needs to add additional devices, which are bulky and expensive.

FIG. 2 illustrates a schematic flowchart of a method 200 for controlling a starting current of a motor according to an embodiment of the present invention.

As shown in FIG. 2, at 201 of method 200, a peak short-circuit current calculation coefficient k or a power factor (PF) of the motor is determined. At 202, a power factor angle corresponding to the peak short-circuit current calculation coefficient or the power factor is determined. At 203, a closing angle is selected to start the motor based on the determined power factor angle.

According to the embodiment of the present invention, the smaller the PF is, the easier an overshoot would be generated, that is, a large inrush current would be generated. When the closing angle of the motor is equal to the power factor angle $\theta$ determined by k or PF, there is basically no overshoot.

Therefore, according to the method 200 for controlling the starting current of the motor shown in FIG 2, the starting current of the motor can be reduced, a magnitude of a current flowing through a SiC MOSFET can be reduced, and the reliability of the SiC MOSFET is greatly improved, thus ensuring the operation safety of a product. In addition, according to the embodiments of the present invention, extra heat additionally generated in a motor circuit in a starting process is reduced, so that an overall temperature inside a product is reduced, which is beneficial to temperature rise of the product. Nuisance tripping of a system caused by an excessive starting current of the motor can also be avoided. Furthermore, the method for controlling the starting current of the motor according to the embodiments of the present invention is simple to implement and low in cost.

k may be based on an equivalent impedance at a short-circuit point in the system.

Specifically, k may be obtained based on Equation 1.

$$\mathrm{k} = 1.02 + 0.98e^{-3\frac{R}{X}} \qquad\qquad \text{Equation 1}$$

Assuming that a frequency fc=20Hz (for a rated frequency f=50Hz) or fc=24Hz (for the rated frequency f=60Hz), and calculating an equivalent impedance Zc=Rc+jXc of a positive sequence system from a short-circuit position, R/X or X/R in Equation 1 may be calculated from Equation 2 and Equation 3.

$$\frac{R}{X} = \frac{R_c}{X_c} \cdot \frac{f_c}{f} \qquad\qquad \text{Equation 2}$$

$$\frac{X}{R} = \frac{X_c}{R_c} \cdot \frac{f}{f_c} \qquad\qquad \text{Equation 3}$$

Rc is a real part of the equivalent impedance Zc, which is usually not equal to R at a rated frequency, and Xc is an imaginary part of the equivalent impedance Zc, which is usually not equal to X at the rated frequency.

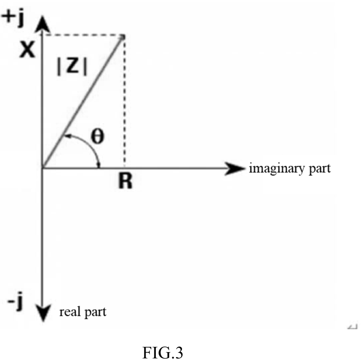

FIG. 3 illustrates a schematic diagram of a relationship between a real part R and an imaginary part X of an impedance z according to an embodiment of the present invention.

As shown in FIG. 3, R=|Z|cos$\theta$ and X=|Z|sin$\theta$, so a power factor angle $\theta$ may be determined according to Equation 4.

$$\theta=\arctan(X/R) \qquad\qquad \text{Equation 4}$$

The power factor angle $\theta$ obtained by Equation 4 is a radian value, which may be converted to an angle value by $\theta*180/\pi$.

Therefore, when a value of k is determined, the power factor angle $\theta$ may be obtained according to Equations 1 to 4, and then a closing angle may be determined.

In an example, a relationship between the power factor and $\theta$ may be PF=cos$\theta$, and a value of PF is usually marked on a body of a motor.

Therefore, when the value of PF is determined, the power factor angle $\theta$ may be obtained according to Equation 5, and then the closing angle may be determined.

$$\theta=\arccos(PF) \qquad\qquad \text{Equation 5}$$

According to the embodiment of the present invention, there is a one-to-one relationship among k, PF and the power factor angle. Moreover, each motor has its own k, PF and power factor angle.

Table 1 illustrates the values of k, PF and the power factor angle according to an embodiment of the present invention. The values shown in Table 1 are only exemplary.

Table 1

| | PF and θ corresponding to different k values of motor | | | | | | | |
|---|---|---|---|---|---|---|---|---|
| k | 1.975 | 1.928 | 1.808 | 1.692 | 1.6 | 1.502 | 1.402 | 1.31 |
| PF | 0.028386 | 0.043 | 0.072685 | 0.125765 | 0.17229 | 0.2301 | 0.299 | 0.405 |
| power factor angle θ (degree) | 89.505 | 88.38 | 85.86 | 82.8 | 80.082 | 76.68 | 72.54 | 67.86 |

When the closing angle is less than θ, overshoot usually occurs, and when the closing angle is greater than θ, overshoot does not necessarily occur because of a large resistance component.

Table 2 schematically illustrates inrush currents and k corresponding to motors with different international efficiency classes (IEs).

Table 2

| | LRA/FLA (average) | $\kappa = I_{peak,rms}/LRA$ (order of magnitude) | $I_{peak,rms}/FLA$ | $I_{peak}/FLA$ peak value | Evolution from IE1 |
|---|---|---|---|---|---|
| IE1 | 7.2 | 1.3 | 9.4 | 13.2 | - |
| IE2 | 7.3 | 1.4 | 10.2 | 14.5 | 9% |
| IE3 | 8.4 | 1.5 | 12.6 | 17.8 | 35% |
| IE4 | 9 | 1.6 | 14.4 | 20.4 | 54% |
| | | 1.8 | 16.2 | 22.9 | 73% |
| | | 2.0 | 18.0 | 25.5 | 92% |

In Table 2, LRA represents a locked-rotor amps, and FLA represents a full load amps. FLA may also indicate a rated current.

As can be seen in Table 2, there is also a correspondence between the peak short-circuit current calculation coefficient k and the international efficiency class IE of the motor, so k of each motor may also be determined according to IE.

For example, referring to Table 1 and Table 2, for a motor with IE1, k=1.3, PF=0.4, a minimum power factor angle θ is 67.86 degree, and an optimal closing angle may be 66.4 degree; for a motor with IE2, k=1.4, PF=0.3, the minimum power factor angle θ is 72.54 degree, and the optimal closing angle may be 72.5 degree; for a motor with IE3, k=1.5, PF=0.23, the minimum power factor angle θ is 76.68 degree, and the optimal closing angle may be 76.67 degree; for a motor with an international efficiency above IE4, k=1.4~1.975, and the optimal closing angle may be determined according to the PF value. When PF=0.075, the minimum power factor angle θ is 85.86 degree, and the optimal closing angle may be 85.65 degree.

Although values of k shown in Table 1 and Table 2 are different in value, it should be understood by those skilled in the art that the difference is only caused by the accuracy or error in calculation, and k indicates the peak short-circuit current calculation coefficient in both Tables 1 and 2. In fact, the value of k is not discrete, but continuous.

According to the embodiment of the present invention, by controlling the closing angle of the motor, the inrush current of the motor may be controlled to be similar to the locked-rotor amps, for example, locked-rotor amps $\times \pm$ 1.05.

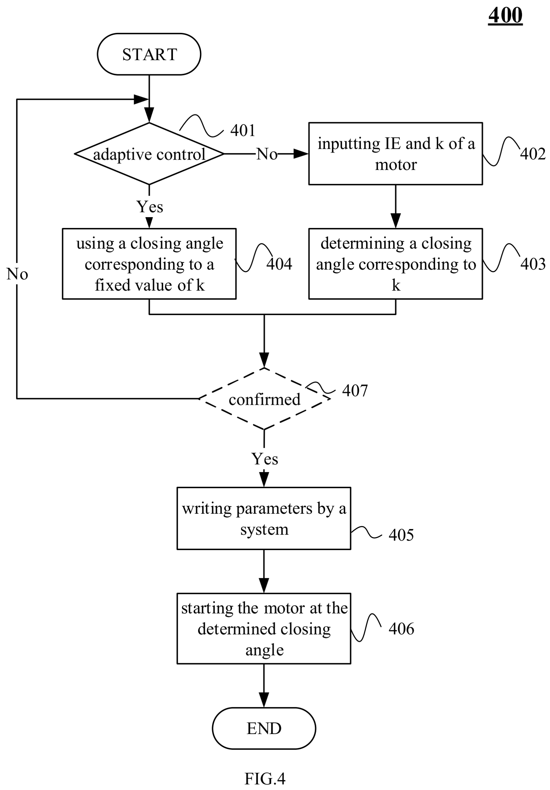

FIG. 4 illustrates a schematic flowchart of a more detailed method 400 for controlling a starting current of a motor according to an embodiment of the present invention.

As shown in FIG. 4, at 401 of the method 400, it is determined whether to enter an adaptive control mode.

The adaptive control mode refers to a mode in which a closing angle of a motor is determined using a fixed k for all motors, for example, k=1.8 or k=1.92 is used as a default value of k to control closing angles of all motors. Here, whether to enter the adaptive control mode may be selected through a human-machine interface (HMI).

If the k and IE of the motor are known, the adaptive control mode may not be entered (No at 401). At 402, the IE and k of the motor may be input, and at 403, a power factor angle θ corresponding to the value of k is determined according to Equations 1 to 4, and the closing angle is selected based on the power factor angle θ, for example, the closing angle is selected to be equal to or slightly greater than the power factor angle θ.

If the k and IE of the motor are not known, it may enter the adaptive control mode (Yes at 401), and the closing angle of the motor may be determined with a fixed k (404). Similarly to 403, according to Equations 1 to 4, the power factor angle θ corresponding to the fixed value of k is determined, and the closing angle is selected based on the power factor angle θ.

At 405, a system configures the motor with the determined closing angle as a parameter, and starts the motor at the closing angle at 406. For example, at 405, the system may provide the determined closing angle to a microcontroller unit (MCU), and the MCU control to start the motor at 406.

According to the embodiment of the present invention, considering errors or delays in software control, at 403, it may further subtract a predetermined bias angle from the determined power factor angle to obtain a corrected closing angle, and the motor may be started at the corrected closing angle at 406.

For example, the predetermined offset angle may be, for example, 4.5 degree. However, the embodiments of the present invention are not limited thereto.

For a three-phase asynchronous motor, when the motor is started, two of the three phases may be closed at the closing angle, e.g., the corrected closing angle, and the two phases may be any two phases. Then, after a predetermined period of time has elapsed after the two phases are closed, a remaining one of the three phases is still closed at the closing angle.

In an example, the predetermined period of time may be, for example, 5ms, which corresponds to 90 degree.

In an example, the method 400 may also comprise 407 (as shown in the dashed box), at which the closing angle may be confirmed, and if it is confirmed (Yes at 407), it proceeds to 405, otherwise (No at 407), the process returns to 401, and the selection of whether to enter the adaptive control mode is restarted.

According to the embodiment of the present invention, when the fixed/default value of k is used to determine the closing angles of all motors, compared with the case where the closing angle is not controlled, the starting inrush current generated after fixing the value of k is still reduced a lot, although the motor will also generate the starting inrush current when it is started. For example, when the closing angles of all motors are controlled with k=1.646, the starting inrush current may be reduced by 34%.

Table 3 illustrates a simulation result when the closing angles of all motors are controlled with k=1.928.

Table 3

| value of k | self-power factor of value of k cos φ closed (equal to LRA) | | | | | | k=1.928 self-power factor cos φ closed (88.38 degree) | | | | | | max value comparison k=1.928 | |
|---|---|---|---|---|---|---|---|---|---|---|---|---|---|---|
| | IB | | | IC | | | IB | | | IC | | | | |
| | Max(A) | LRA (A) | Error Rate | Max(A) | LRA(A) | Error Rate | Max(A) | LRA(A) | Error Rate | Max(A) | LRA(A) | Error Rate | IB | IC |
| k=1.3 | 421 | 418 | 0.72% | 420 | 418 | 0.48% | 452 | 412 | 9.71% | 440 | 415 | 6.02% | 8.13% | 5.26% |
| k=1.4 | 501 | 501 | 0.00% | 501 | 501 | 0.00% | 543 | 495 | 9.70% | 529 | 486 | 8.85% | 8.38% | 5.59% |
| k=1.5 | 612 | 611 | 0.16% | 612 | 612 | 0.00% | 664 | 603 | 10.12% | 646 | 603 | 7.13% | 8.67% | 5.56% |
| k=1.6 | 773 | 772 | 0.13% | 772 | 771 | 0.13% | 827 | 757 | 9.25% | 807 | 757 | 6.61% | 7.12% | 4.67% |
| k=1.692 | 1035 | 1035 | 0.00% | 1034 | 1033 | 0.10% | 1091 | 1012 | 7.81% | 1068 | 1012 | 5.53% | 5.41% | 3.39% |
| k=1.8 | 1572 | 1566 | 0.38% | 1568 | 1562 | 0.38% | 1584 | 1522 | 4.07% | 1565 | 1524 | 2.69% | 1.15% | 0.19% |
| k=1.928 | 1550 | 1525 | 1.64% | 1538 | 1528 | 0.65% | 1551 | 1522 | 1.91% | 1543 | 1530 | 0.85% | 1.70% | 0.98% |
| k=1.975 | 3829 | 3804 | 0.66% | 3818 | 3802 | 0.42% | 3920 | 3828 | 2.40% | 3879 | 3834 | 1.17% | 3.05% | 2.03% |

As shown in Table 3, when k=1.928, the calculated power factor angle θ is 88.38 degree. When the motor is started with the 88.38 degree as the closing angle (without considering the predetermined bias angle), a maximum error in phases B and C is about 8.67% in a motor with k=1.3~1.975. Moreover, it may guarantee that the starting inrush current ≈ locked-rotor amps * 1.05.

Assuming that the international efficiency of the motor is IE4, by referring to Table 1, the locked-rotor amps is 9 times a rated current, and the rated current is 32A, and considering a margin of 1.1 times, the starting inrush current $I_{Irush}$=9*32*1.1*1.414*1.05=470A. When the closing angle is 88.38 degree, reduction rate = 470/(32*25.5)=58%, and the starting inrush current is reduced by 42% compared with the case where the closing angle is not controlled.

The controlled starting inrush current is safe for a SiC MOSFET, which solves the problems caused by overcurrent damage and uneven current sharing. At the same time, the problem of EMC or nuisance tripping of a product caused by large di/dt when the motor is started is avoided.

According to a further embodiment of the present invention, at 404, the value of k may be adaptively adjusted.

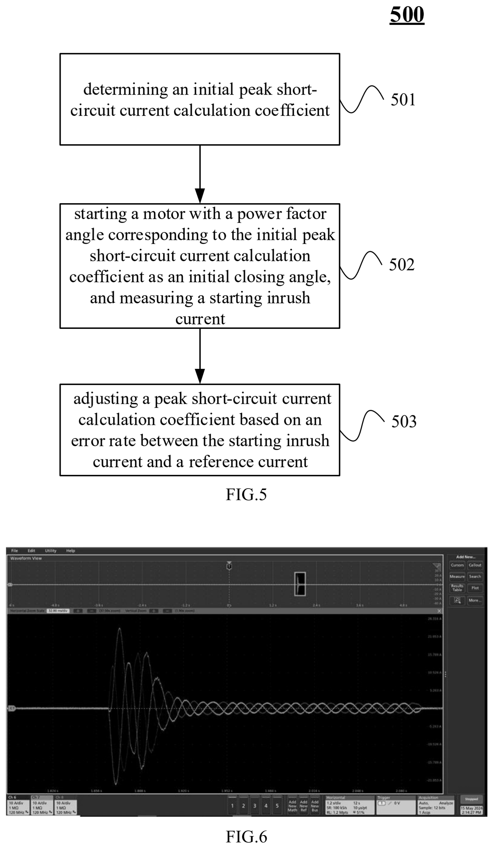

FIG. 5 illustrates a schematic flowchart of a method 500 for adaptively adjusting a peak short-circuit current calculation coefficient k according to an embodiment of the present invention.

As shown in FIG. 5, at 501 of 500, an initial peak short-circuit current calculation coefficient is determined. For example, k=1.928 may be used as the initial peak short-circuit current calculation coefficient. Of course, other values may also be used as an initial value of k, for example, k=1.8, k=1.5, etc.

At 502, a motor is started with a power factor angle corresponding to the initial peak short-circuit current calculation coefficient as an initial closing angle, and a starting inrush current is measured.

At 503, the peak short-circuit current calculation coefficient is adjusted based on an error rate between the starting inrush current and a reference current.

The reference current may be the locked-rotor amps when the motor is started at a closing angle determined by an optimal peak short-circuit current calculation coefficient of the motor. Here, the optimal peak short-circuit current calculation coefficient may refer to the motor's own k.

In another example, the reference current may be the locked-rotor amps when the motor is started with a power factor angle corresponding to the current peak short-circuit current calculation coefficient as the closing angle.

Referring to Table 3, when k=1.928 is used as the initial value of k, the calculated power factor angle θ is 88.38 degree. When the motor is started with the 88.38 degree as the closing angle (without considering a predetermined bias angle), for a motor with k=1.3 actually, a maximum starting inrush current of phase B is 452A, and its locked-rotor amps should be 412A, so error rate = (452-412)/412=9.71%; a maximum starting inrush current of phase C is 440A, and its locked-rotor amps should be 415A, so error rate = (440-415)/415=6.02%. For motors with other values of k, cases are similar.

The max value comparison in the last column in Table 3 indicates, with respect to each phase, for example, the phase B and phase C in Table 3, an error rate between a maximum starting inrush current when controlling with a default value of k (1.928 in Table 3) and a locked-rotor amps when the motor is started with a closing angle corresponding to a value of the motor's own k. In the case of Table 3, it is the error rate between the maximum starting inrush current at k=1.928 and the locked-rotor amps when the motor is started with the closing angle corresponding to the value of the motor's own k. In this way, errors of all motors can be covered by a specified value of k.

It can be seen that the error rate between the maximum starting inrush current and the locked-rotor amps when the motor is started with a fixed value corresponding to k is generally greater than that between the maximum starting inrush current and the locked-rotor amps when the motor is started with the closing angle corresponding to the value of the motor's own k. For example, as shown in Table 3, for a motor with k=1.3, the error rates of the former are 9.71% (phase B) and 6.02% (phase C) respectively, while the error rates of the latter are 8.13% (phase B) and 5.26 (phase C) respectively. Therefore, the value of k may be adjusted according to the error rate between the maximum starting inrush current and the locked-rotor amps when the motor is started with the fixed value corresponding to k. This maximum error rate is used as a baseline for adjustment, so the algorithm control is stricter.

In another example, the k may also be adjusted according to the error rate between the maximum starting inrush current and the locked-rotor amps when the motor is started with the closing angle corresponding to the value of the motor's own k.

In an example, the peak short-circuit current calculation coefficient may be adjusted based on an expected error rate among the error rates of three phases. For example, the value of k may be adjusted based on a phase that has a highest requirement for the error rate among three phases A, B and C.

Since the value of k is a continuous value, the initial peak short-circuit current calculation coefficient may be increased or decreased by a predetermined step, and the process from 501 to 503 may repeated until the expected error rate is satisfied.

In another example, when the error rate of each phase at each value of k of the motor is known, the value of k may also be directly adjusted to a value of k satisfying the expected error rate.

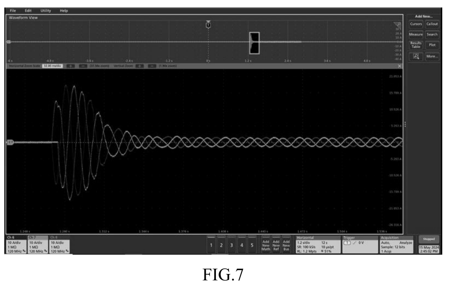

FIG. 6 illustrates a schematic diagram of a waveform of a starting current of a motor without controlling a closing angle of the motor, and FIG. 7 illustrates a schematic diagram of a waveform of a starting current of a motor with controlling a closing angle of the motor according to an embodiment of the present invention.

As shown in FIG. 7, according to the embodiment of the present invention, a starting inrush current (a leftmost peak) of each phase of the motor is basically equal to a locked-rotor amps.

Therefore, according to the embodiments of the present invention, a starting current of a motor is reduced, a magnitude of a current flowing through a SiC MOSFET is reduced, and the reliability of the SiC MOSFET is greatly improved, thus ensuring the operation safety of a product. In addition, according to the embodiments of the present invention, extra heat additionally generated in a motor circuit in a starting process is reduced, so that an overall temperature inside a product is reduced, which is beneficial to temperature rise of the product. Nuisance tripping of a system caused by an excessive starting current of the motor can also be avoided. Furthermore, the method for controlling the starting current of the motor according to the embodiments of the present invention is simple to implement and low in cost.

A person of ordinary skill in the art can realize that the units and algorithm steps of each embodiment described in connection with the embodiments disclosed in the present invention can be implemented by electronic hardware, computer software or a combination of the two. In order to clearly illustrate the interchangeability of hardware and software, the components and steps of each embodiment have been generally described according to functions in the above description. Whether these functions are performed in hardware or software depends on the specific application and design constraints of the technical scheme. Skilled people can use different methods to realize the described functions for each specific application, but such realization should not be considered beyond the scope of the present invention.

It can be clearly understood by those skilled in the art that for the convenience and conciseness of description, the specific working processes of the systems, apparatuses and units described above can refer to the corresponding processes in the aforementioned method embodiments, and will not be repeated here.

In several embodiments provided by the present invention, it should be understood that the disclosed systems, apparatuses and methods can be implemented in other ways. For example, the apparatus embodiment described above is only schematic. For example, the division of the units is only a logical function division. In actual implementation, there may be other division methods, for example, multiple units or components can be combined or integrated into another system, or some features can be ignored or not performed. On the other hand, the mutual coupling or direct coupling or communication connection shown or discussed can be indirect coupling or communication connection through some interfaces, apparatuses or units, which can be electrical, mechanical or other forms.

The units described as separate parts may or may not be physically separated, and the parts displayed as units may or may not be physical units, which may be located in one place or distributed to multiple network units. Some or all of the units can be selected according to actual requirements to achieve the purpose of the embodiments.

In addition, each functional unit in each embodiment of the present invention may be integrated into one processing unit, or each unit may exist physically alone, or two or more units may be integrated into one unit. The above integrated units can be implemented in the form of hardware or software functional units.

The integrated units can be stored in a computer-readable storage medium if they are implemented in the form of software functional units and sold or used as independent products. Based on this understanding, the technical solution of the present invention essentially or a part thereof that contributes to the prior art or in whole or in part can be embodied in the form of a software product, which is stored in a storage medium and includes several instructions to cause a computer device (which may be a personal computer, a server, or a network device, etc.) to perform all or part of the steps of the methods described in various embodiments of the present invention. The aforementioned storage medium includes: U disk, mobile hard disk, Read-Only Memory (ROM), Random Access Memory (RAM), magnetic disk or optical disk and other media that can store program codes.

The above descriptions are only the specific implementations of the present invention, but the scope of protection of the present invention is not limited thereto. Any person familiar with the technical field can easily think of changes or substitutions within the technical scope disclosed by the present invention, which should be included in the scope of protection of the present invention. Therefore, the scope of protection of the present invention should be based on the scope of protection of the claims.

## Claims

1.  A method for controlling a starting current of a motor, **characterized in that**, comprising:

    determining a peak short-circuit current calculation coefficient or a power factor of the motor;
    determining a power factor angle corresponding to the peak short-circuit current calculation coefficient or the power factor; and
    selecting a closing angle to start the motor based on the determined power factor angle.

2.  The method of claim 1, **characterized in that** the determining the peak short-circuit current calculation coefficient or the power factor of the motor comprises determining the peak short-circuit current calculation coefficient, and the determining the power factor angle corresponding to the peak short-circuit current calculation coefficient or the power factor comprises determining the power factor angle corresponding to the peak short-circuit current calculation coefficient.

3.  The method of claim 2, **characterized in that** the determining the peak short-circuit current calculation coefficient comprises:

    determining an initial peak short-circuit current calculation coefficient;
    starting the motor with a power factor angle corresponding to the initial peak short-circuit current calculation coefficient as an initial closing angle, and measuring a starting inrush current; and
    adjusting the peak short-circuit current calculation coefficient based on an error rate between the starting inrush current and a reference current.

4.  The method of claim 3, **characterized in that** the reference current is one of a locked-rotor amps when the motor is started at a closing angle determined by the current peak short-circuit current calculation coefficient and a locked-rotor amps when the motor is started at a closing angle determined by an optimal peak short-circuit current calculation coefficient of the motor.

5. The method of claim 3, **characterized in that** the error rate between the starting inrush current and the reference current comprises an error rate of each of three phases, and
the adjusting the peak short-circuit current calculation coefficient based on the error rate between the starting inrush current and the reference current comprises adjusting the peak short-circuit current calculation coefficient based on an expected error rate among error rates of the three phases.

6. The method of claim 1, **characterized in that** the peak short-circuit current calculation coefficient is a fixed value.

7. The method of claim 1, **characterized in that** the peak short-circuit current calculation coefficient is based on an equivalent impedance at a short-circuit point in a system.

8. The method of claim 1, **characterized in that** the determining the peak short-circuit current calculation coefficient or the power factor of the motor comprises determining the power factor, and
the determining the power factor angle corresponding to the peak short-circuit current calculation coefficient or the power factor comprises determining the power factor angle corresponding to the power factor.

9. The method of claim 1, **characterized in that** the selecting the closing angle to start the motor based on the determined power factor angle comprises:
subtracting a predetermined bias angle from the determined power factor angle to obtain a corrected closing angle.

10. The method of claim 8, **characterized in that**, further comprising:

closing two of the three phases at the corrected closing angle; and
closing a remaining one of the three phases at the corrected closing angle after a predetermined period of time has elapsed after the two phases are closed.

11. The method of claim 1, **characterized in that** the determining the peak short-circuit current calculation coefficient or the power factor of the motor further comprises determining the peak short-circuit current calculation coefficient or the power factor based on an international efficiency of the motor.

12. An apparatus for controlling a starting current of a motor, **characterized in that**, comprising:

a memory; and
a processor coupled to the memory and configured to perform the method of any of claims 1-11.

FIG.1

**200**

determine a peak short-circuit current calculation coefficient or a power factor of a motor — 201

determine a power factor angle corresponding to the peak short-circuit current calculation coefficient or the power factor — 202

select a closing angle to start the motor based on the determined power factor angle — 203

FIG.2

FIG.3

**400**

START

adaptive control — 401 — No → inputting IE and k of a motor — 402

Yes

using a closing angle corresponding to a fixed value of k — 404

determining a closing angle corresponding to k — 403

No

confirmed — 407

Yes

writing parameters by a system — 405

starting the motor at the determined closing angle — 406

END

FIG.4

**500**

determining an initial peak short-circuit current calculation coefficient  501

↓

starting a motor with a power factor angle corresponding to the initial peak short-circuit current calculation coefficient as an initial closing angle, and measuring a starting inrush current  502

↓

adjusting a peak short-circuit current calculation coefficient based on an error rate between the starting inrush current and a reference current  503

FIG.5

FIG.6

FIG.7

# EUROPEAN SEARCH REPORT

**Application Number**

EP 26 30 5058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 659 212 A (SUZHOU AIKE WEIER TECH CO LTD) 2 February 2018 (2018-02-02) | 1,6-12 | INV. H02P1/04 |
| Y | * claim 1; figure 1 * | 2,3 | H02P1/16 |
| A | | 4,5 | H02P6/20 |
| | ----- | | |
| Y | EP 4 297 215 A1 (ABB SCHWEIZ AG [CH]) 27 December 2023 (2023-12-27) | 2,3 | |
| A | * paragraph [0030] - paragraph [0031]; claims 1,6; figures 1,2 * | 1,12 | |
| | ----- | | |
| A | LINDELL ELISABETH ET AL: "Minimizing Inrush Current and Voltage Dip at Energization of Transformer", 2024 7TH INTERNATIONAL CONFERENCE ON ELECTRIC POWER EQUIPMENT - SWITCHING TECHNOLOGY (ICEPE-ST) IEEE, 10 November 2024 (2024-11-10), pages 316-320, XP034782759, DOI: 10.1109/ICEPE-ST61894.2024.10792497 [retrieved on 2024-12-19] * Sections III and IV * | 1-12 | |
| | ----- | | |

**TECHNICAL FIELDS SEARCHED (IPC)**

H02P

The present search report has been drawn up for all claims

| Place of search | Date of completion of the search | Examiner |
|---|---|---|
| Munich | 21 May 2026 | Kruip, Stephan |

EPO FORM 1503 03.82 (P04C01)

## ANNEX TO THE EUROPEAN SEARCH REPORT
## ON EUROPEAN PATENT APPLICATION NO.

EP 26 30 5058

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2026

| Patent document cited in search report | | Publication date | Patent family member(s) | | Publication date |
|---|---|---|---|---|---|
| CN 107659212 | A | 02-02-2018 | NONE | | |
| EP 4297215 | A1 | 27-12-2023 | CN | 117293778 A | 26-12-2023 |
| | | | EP | 4297215 A1 | 27-12-2023 |
| | | | FI | 4297215 T3 | 04-07-2025 |
| | | | US | 2023420932 A1 | 28-12-2023 |

For more details about this annex : see Official Journal of the European Patent Office, No. 12/82